# EUROPÄISCHE PATENTSCHRIFT

(11) **EP 0 889 790 B1**
(45) Veröffentlichungstag und Bekanntmachung des Hinweises auf die Patenterteilung: **15.09.1999**
(21) Anmeldenummer: 97906194.2
(22) Anmeldetag: 10.03.1997
(51) Int. Cl.: B60B 3/04, B23K 26/00, B21D 53/26

(54) **VERFAHREN ZUM HERSTELLEN EINES LEICHTBAURAD AUS STAHLBLECH FÜR FAHRZEUGE**
PROCESS OF MANUFACTURING OF A LIGHTWEIGHT SHEET-STEEL WHEEL FOR VEHICLES
PROCEDEE DE FABRICATION D'UNE ROUE DE CONSTRUCTION LEGERE EN TOLE D'ACIER POUR VEHICULES

(30) Priorität: 27.03.1996 DE 19612021
(43) Veröffentlichungstag der Anmeldung: 13.01.1999
(73) Patentinhaber: Thyssen Stahl Aktiengesellschaft, 47166 Duisburg (DE)
(72) Erfinder: STEGEMANN, Thomas, D-46537 Dinslaken (DE); FRINGS, Adam, D-45470 Mülheim (DE)
(74) Vertreter: Cohausz & Florack
(86) Internationale Anmeldenummer: EP9701194
(87) Internationale Veröffentlichungsnummer: WO9735733

(56) Entgegenhaltungen:
- EP-A- 0 054 931
- EP-A- 0 570 340
- DE-A- 3 144 090
- DE-A- 3 239 675
- DE-A- 3 410 308
- DE-A- 4 014 480
- DE-U- 29 605 728
- US-A- 1 623 883

## Beschreibung

Im Fahrzeugbau werden seit Jahrzehnten große Anstrengungen unternommen, um das Gewicht des Fahrzeuges zu reduzieren. Hierbei kommt vor allem den bewegten Massen, insbesondere den Rädern große Bedeutung zu. Seit langem schon haben die Käufer von Kraftfahrzeugen die Möglichkeit, zwischen einem leichten Rad aus Aluminium und einem schweren Rad aus Stahl zu wählen. Trotz der Vorteile des Aluminiumrades hinsichtlich des besseren Fahrverhaltens des Kraftfahrzeuges und der günstigeren Betriebskosten eines mit Rädern aus Leichtmetall bestückten Kraftfahrzeuges kauft man überwiegend die im Anschaffungspreis wesentlich billigeren Räder aus Stahl.

Die meisten in der Praxis eingesetzten Räder aus Stahl sind aus einer fertig geformten Felge und einer fertig geformten Radscheibe bzw. Radschüssel zusamemngeschweißt. Bei einem solchen Rad besteht die Möglichkeit, die Radscheibe bzw. die Radschüssel aus einem Material mit einer größeren Materialstärke zu wählen als das der Radfelge. Der Herstellungsaufwand eines solchen Rades ist aber wegen der separaten Verformung der Radscheibe bzw. der Radschüssel und der Radfelge und das anschließende Zusammenschweißen dieser beiden Teile groß.

Außerdem sind Leichtbauräder aus Aluminium und Stahl bekannt, die aus einer ebenen kreisförmigen Scheibe durch Umformen und Spalten hergestellt sind (DE 34 10 308 A1, DE 32 39 675 C2). Die Herstellung dieser Fahrzeugräder erfolgt in der Weise, daß der äußere Rand der kreisförmigen Scheiben radial in zwei Kreisringe gespalten wird. Diese Kreisringe werden aufgespleißt und aus ihnen die Felge geformt. Bei einem solchen Rad wird der Leichtbauweise also dadurch Rechnung getragen, daß die am stärksten belastete Radscheibe bzw. Radschüssel aus einem dickeren Material und die Felge aus einem dünneren Material besteht. Doch ist trotz der Herstellung eines solchen Rades aus einem einzigen Stück der Herstellungsaufwand wegen des Aufspleißens des äußeren Randes der Kreisscheibe groß.

Ferner ist ein gattungsgemäßes Verfahren bekannt, bei dem eine Aluminiumfelge für luft- oder gummibereifte Fahrzeuge aus Blech gefertigt ist (EP 0 054 931 A2). Die Herstellung dieser Felge erfolgt in der Weise, daß von einer ebenen Kreisscheibe ausgegangen wird, die in ersten Schritt topfförmig verformt wird. Dabei erhält die Wand im unteren Bereich bereits eine Form, aus der nach Durchtrennung die beiden Felgenhörner gebildet werden. Nach Abtrennung wird die Wand der anderen Seite des Bodens angeschweißt und bildet zusammen mit dem radialäußeren Teil des Bodens und dem unteren Teil der Wand die Felgenschüssel. Ein solches Herstellungsverfahren ist wegen der erforderlichen Abtrennung eines Teils der umgeformten Kreisscheibe und des Anschweißens aufwendig.

Schließlich ist ein Scheibenrad für ein luftbereiftes Fahrzeug als geschweißte Blechkonstruktion bekannt (DE 31 44 090), bei der die in der Materialstärke dickere Radscheibe über ihren in der Materialstärke dünneren, ein Felgenhorn bildenden Rand in das in der Materialstärke dünnere Felgenbett übergeht. Es ist aus diesen Stand der Technik nicht bekannt, von welchen Blechzuschnitten für die Radscheibe und die Radfelge ausgegangen wird.

Der Erfindung liegt die Aufgabe zugrunde, ein Herstellungsverfahren für ein Leichtbaurad für Fahrzeuge anzugeben, das einfach ist.

Diese Aufgabe wird durch die Merkmale des Patentanspruchs 1 gelöst.

Bei dem erfindungsgemäßen Verfahren werden die unterschiedlich stark beanspruchten Teile, nämlich die Radscheibe bzw. die Radschüssel und die Radfelge entsprechend ihrer Beanspruchung im Betrieb unterschiedlich dimensioniert. Eine solche Dimensionierung läßt sich problemlos vornehmen, da die kreisförmige Stahlblechscheibe aus verschiedenen Blechen zusammengeschweißt wird. Es entfällt auch das aufwendige Aufspalten eines äußeren Randbereichs, weil für die Felge von vornherein entsprechend dimensioniertes, insbesondere dünneres Material verwendet werden kann. Die Herstellung ist auch einfach, da von einem einzigen Stück Vormaterial, nämlich der Stahlblechscheibe ausgegangen wird. Das Kaltumformen kann in bewährter Weise durch Tiefziehen, Drücken oder Rollprofilieren erfolgen. Problemen wegen der Schweißnaht beim Umformen oder im Betrieb kann dadurch begegnet werden, daß die Schweißnaht in einem nicht oder in einem gegenüber stark verformten Bereichen geringverformten Bereich liegt. Ein solcher Bereich liegt z.B. unmittelbar neben dem der Radscheibe benachbarten Horn der Radfelge. Vorzugsweise liegt die Schweißnaht auf der Radfelgenseite des Horn.

Eine weitere Maßnahme, Problemen wegen der Schweißnaht zu begegnen, besteht darin, daß die Schweißnaht eine Laserschweißnaht, eine Elektronenstrahlschweißnaht oder eine mit Laserstrahl und Plasmastrahl gleichzeitig erzeugte Schweißnaht ist. Eine solche Schweißnaht zeichnet sich dadurch aus, daß sie sehr schmal ist und durch die Schweißung die Nachbarbereiche in ihrem Festigkeitsverhalten kaum verändert werden. Deshalb sind strahlgeschweißte Formteile besonders für das Kaltverformen geeignet.

Zur Vermeidung eines sprunghaften Übergangs an der Schweißnaht vom dünneren Material auf das dickere Material sollte der an die Schweißnaht angrenzende dickere Bereich bis auf die dünnere Materialstärke verjüngt sein.

Im folgenden wird die Erfindung anhand einer ein Ausführungsbeispiel schematisch darstellenden Zeichnung näher erläutert. Im einzelnen zeigen:
- Fig. 1: ein Fahrzeugrad im Querschnitt,
- Fig. 2 a, b: eine kreisförmige Stahlblechscheibe im Querschnitt für die Herstellung eines Leichtbaurades gemäß Fig. 1 in zwei Alternativen und
- Fig. 3: ein aus der Stahlblechscheibe gemäß Fig. 2a, b durch Kaltumformen, wie z. B. Tiefziehen oder Drücken hergestellter Topf im perspektivischen Halbschnitt als Zwischenprodukt bei der Herstellung des Rades gemäß Fig. 1.

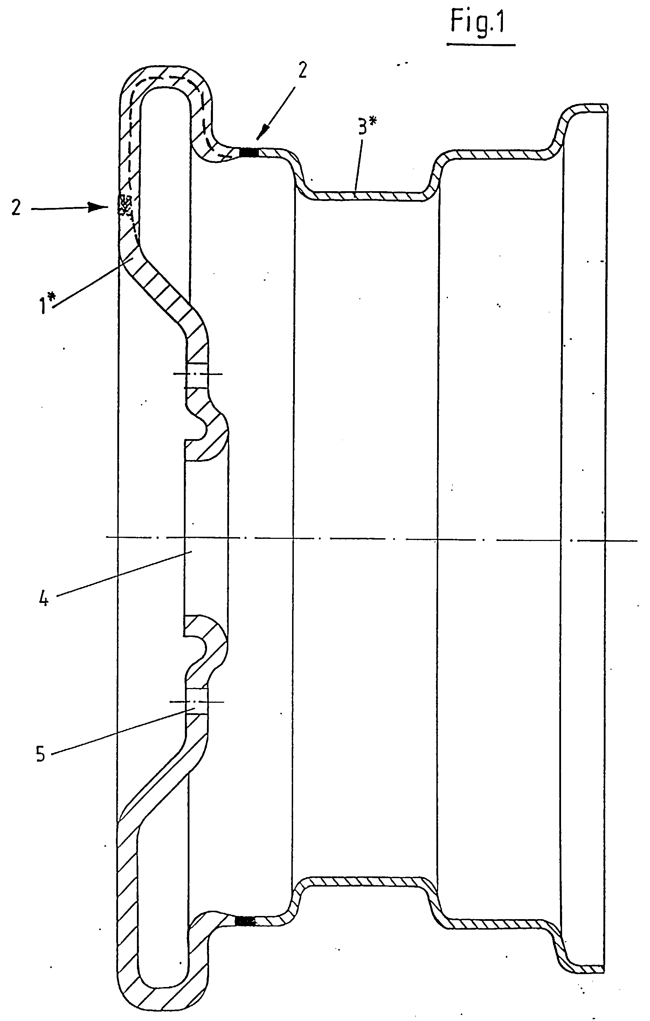

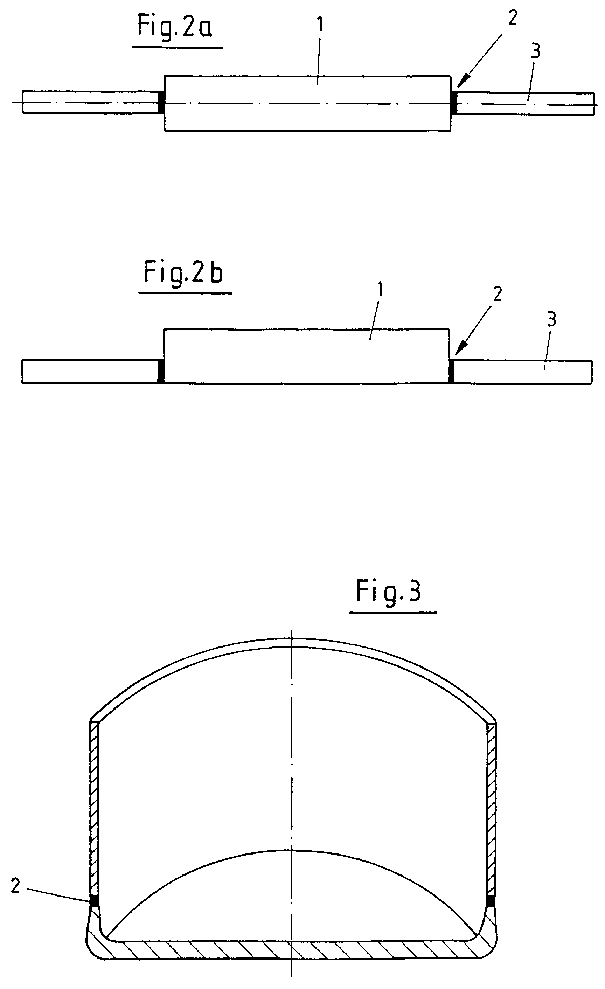

Bei der Herstellung des Leichtbaurades gemaß Fig. 1 wird von einer ebenen Stahlblechscheibe (Fig. 2a, b) ausgegangen, die aus einer zentralen ebenen Ringscheibe 1 und einer an deren Rand mittels einer Strahlschweißnaht 2 angeschweißten ebenen Ringscheibe 3 besteht. Sowohl die Kreisscheibe 1 als auch die Ringscheibe 3 bestehen aus Stahlblech. Kreisscheibe und Ringscheibe können so zueinander ausgerichtet werden, daß entweder ihre Dickenmittellinien (Fig. 2a) oder ihre Oberflächen (Fig. 2b) in einer Horizontalebene liegen.

Die Kreisscheibe 1 hat eine größere Materialstärke als die Kreisringscheibe 3. Die Kreisscheibe 1 kann allerdings auch die gleiche Materialstärke wie die Kreisringscheibe 3 haben. In diesem Fall wird in der Regel aber die Kreisscheibe 1 aus einem Material größerer Festigkeit als das der Kreisringscheibe 3 bestehen. Entsprechend den örtlichen Beanspruchungen am Leichtbaurad können die Kreisscheibe 1 und die Kreisringscheibe 3 bezüglich der Materialstärken und der Festigkeiten dimensioniert werden. Kombinationen jeder Art sind denkbar.

In einer ersten Verformungsstufe wird die ebene Stahlblechscheibe 1, 2, 3 zu einem Topf entsprechend Fig. 3 insbesondere durch Tiefziehen umgeformt. Bereits bei dieser Umformung kann der Materialsprung an der Schweißnaht 2 durch Verjüngung des an der Schweißnaht 2 angrenzenden Randbereichs der Materialstärke des Kreisringbereichs 3 angepaßt werden. Denkbar ist allerdings auch, daß vor dem ebenen Anschweißen der sich verjüngende Rand erzeugt wird.

In weiteren Verformungsstufen, insbesondere durch Rollprofilieren, wird dann der topfförmige Körper gemäß Fig. 3 in die in Fig. 1 beispielhaft dargestellte Endform des Rades gebracht. Dabei entsteht aus dem Kreisscheibenring 3 der größte Teil der Radfelge 3* und aus der Kreisscheibe 1 die gesamte Radscheibe bzw. Radschüssel 1* sowie ein Felgenhorn. Vor diesen weiteren Umformschritten durch Rollprofilieren oder Drücken, während dieser Schritte oder danach, werden in die Radscheibe bzw. Radschüssel 1* eine mittige Ausnehmung 4 für den Kopf einer Radachse und ein Kranz von Löchern 5 für Radbolzen hergestellt.

Die Gestaltung der Radscheibe bzw. Radschüssel kann dann nach Gesichtspunkten der positiven optischen Wirkung so erfolgen, daß die heute noch gebräuchlichen Kunststoffabdeckungen für die Radschüssel/Radscheibe, die einen beträchtlichen Anteil der Kosten für solche Fahrzeugräder verursachen, enfallen können.

Die Schweißnaht 2 kann, vom Felgenhorn aus gesehen, auf der Seite der Radfelge 3* oder, wie angedeutet, auf der Seite der Radschüssel 1* liegen. Liegt sie auf der Seite der Radfelge 3*, dann ist sie von außen bei aufgezogenem Reifen nicht sichtbar, so daß der optische Eindruck des Fahrzeugrades besonders vorteilhaft ist. Liegt die Schweißnaht dagegen auf der Seite der Radschüssel 1*, so besteht der Vorteil darin, daß der Anteil an dünnem Felgenmaterial am Gesamtrad maximiert und demzufolge auch die Gewichtsersparnis maximiert wird. Einer Wahl der Schweißnahtposition in diesem Sinne sind sicherlich festigkeitsmechanische Grenzen gesetzt, so daß bezüglich der Schweißnahtposition ein Kompromiß hinsichtlich der optischen Wirkung des Rades und einer möglichst großen Gewichtsersparnis gefunden werden muß.

Mit diesem Herstellverfahren können sowohl symmetrische als auch unsymmetrische Felgenprofile erzeugt werden.

Durch die Verwendung von oberflächenveredelten Stahlblechgüten läßt sich eine gute Korrosionsbeständigkeit des Rades sowie eine vorteilhafte optische Wirkung erzielen.

## Patentansprüche

1. Verfahren zum Herstellen eines eine Radscheibe (1*) und eine mit ihrem Rand am Rand der Radscheibe angeschweißten Radfelge (3*) umfassenden Leichtbaurades, wobei die Radscheibe und die Radfelge aus verschiedenen, umgeformten Blechen bestehen, die entsprechend den vorgegebenen Festigkeitsanforderungen dimensioniert sind,
**dadurch gekennzeichnet,** daß von einer ebenen Kreisscheibe (1) für die Radscheibe und einer daran angeschweißten ebenen Kreisringscheibe (3) für die Radfelge ausgegangen wird, die jeweils aus Stahlblech bestehen und sich in der Materialstärke und/oder der Materialfestigkeit voneinander unterscheiden, und daß aus dieser ebenen, von der Kreisscheibe und der Kreisringscheibe gebildeten Schweißeinheit durch Kaltumformen das Rad hergestellt wird.

2. Verfahren nach Anspruch 1,
**dadurch gekennzeichnet,** daß die Durchmesser für die Kreisscheibe (1) und für die Kreisringscheibe (3) so gewählt werden, daß die sie verbindende Schweißnaht (2) am fertigen Rad neben dem der Radscheibe bzw. Radschüssel benachbarten Horn der Radfelge zu liegen kommt.

3. Verfahren nach Anspruch 2,
**dadurch gekennzeichnet,** daß die Schweißnaht auf der Radfelgenseite des Horns zu liegen kommt.

4. Verfahren nach einem der Ansprüche 1 bis 3,
**dadurch gekennzeichnet,** daß die Schweißnaht mittels eines Strahlschweißverfahrens, wie zum Beispiel Elektronenstrahlschweißen oder Laserstrahlschweißen, hergestellt wird.

5. Verfahren nach einem der Ansprüche 1 bis 4,
**dadurch gekennzeichnet,** daß eins in der Materialstärke dickere Kreisscheibe verwendet wird, die an ihrem äußeren Umfang im ebenen Zustand sich in radialer Richtung auf die geringere Materialstärke der Kreisringscheibe reduziert.

## Claims

1. A process for the production of a light construction wheel comprising a wheel disc (1*) and a wheel rim (3*) welded by its edge to the edge of the wheel disc, wherein the wheel disc and the wheel rim are made from different shaped sheets which are dimensioned in accordance with the given strength requirements, **characterized in that** a start is made from a flat circular disc (1) for the wheel disc and a flat annular disc (3) welded thereto for the wheel rim which each consist of sheet steel and differ from one another in thickness and/or strength of material, the wheel being produced by cold working from the flat welding unit formed by the circular and annular discs.

2. A process according to claim 1, **characterized in that** the diameters of the circular disc (1) and the annular disc (3) are so selected that the weld (2) connecting the discs is disposed on the finished wheel alongside in the horn of the wheel rim adjacent the wheel disc/dish.

3. A process according to claim 2, **characterized in that** the weld is disposed on the wheel rim side of the horn.

4. A process according to one of claims 1 to 3, **characterized in that** the weld is produced by a beam welding process such as, for example, electron beam welding or laser beam welding.

5. A process according to one of claims 1 to 4, **characterised in that** a circular disc of greater thickness of material is used which at its outer periphery and in the flat state becomes reduced in the radial direction to the smaller thickness of material of the annular disc.

## Revendications

1. Procédé de fabrication d'une roue de construction légère, comprenant un disque de roue (1*) et une jante de roue (3*) soudée par son bord sur le bord du disque de roue, le disque de roue et la jante de roue étant constitués des différentes tôles déformées qui sont dimensionnées conformément aux exigences de résistance données prescrites, caractérisé en ce qu'on part d'un disque circulaire plat (1) pour le disque de roue et d'un disque annulaire plat (3), soudé au précédent, pour la jante de roue, qui sont respectivement réalisés en tôle d'acier et se différencient l'un de l'autre par l'épaisseur du matériau et/ou la résistance du matériau, et en ce que, à partir de cette unité soudée plate constituée du disque circulaire et du disque annulaire, on fabrique la roue par déformation à froid.

2. Procédé selon la revendication 1, caractérisé en ce que les diamètres pour le disque circulaire (1) et pour le disque annulaire (3) sont choisis de telle sorte que le cordon de soudure (2) qui les assemble vient se placer, sur la roue achevée, à côté du rebord de la jante de roue qui est voisin du disque de roue ou de la cuvette de roue.

3. Procédé selon la revendication 2, caractérisé en ce que le cordon de soudure vient se placer sur le côté jante de roue du rebord.

4. Procédé selon l'une quelconque de revendications 1 à 3, caractérisé en ce que le cordon de soudure est réalisé au moyen d'un procédé de soudage par rayonnement, comme par exemple le soudage par bombardement électronique ou le soudage au laser.

5. Procédé selon l'une quelconque des revendications 1 à 4, caractérisé en ce qu'on utilise un disque circulaire d'épaisseur de matériau plus épaisse qui, sur sa circonférence extérieure, à l'état plat, se réduit en direction radiale à l'épaisseur de matériau inférieure du disque annulaire.
